# EUROPEAN PATENT APPLICATION

(11) **EP 3 932 549 A1**
(43) Date of publication of application: **05.01.2022**
(21) Application number: 20766482.2
(22) Date of filing: 28.02.2020
(51) Int. Cl.: B01J 35/02, B01D 53/86, B01D 53/94, B01J 23/28

(54) **NOX REDUCTION CATALYST**

(30) Priority: 01.03.2019 JP 2019037440
(71) Applicant: Mitsubishi Power, Ltd., Nishi-ku, Yokohama-shi Kanagawa 220-8401 (JP)
(72) Inventor: KIYOSAWA, Masashi, Yokohama-shi, Kanagawa 220-8401 (JP); KANEDA, Shimpei, Yokohama-shi, Kanagawa 220-8401 (JP); KAI Keiichiro, Yokohama-shi, Kanagawa 220-8401 (JP); YOKOYAMA, Koichi, Yokohama-shi, Kanagawa 220-8401 (JP)
(74) Representative: Henkel & Partner mbB
(86) International application number: PCT/JP2020/008383
(87) International publication number: WO 2020/179685

(57) **Abstract**

A NOx reduction catalyst which is composed of a molded body that contains a catalyst component, while having microcracks that extend in the shape of a network or a double-sided comb on the surface of the molded body, and which is configured such that: the microcracks have a 95% crack width of 100 µm or less; the variation coefficient of the crack area ratio is 0.7 or less; and the average of the crack area ratio is preferably 1-14%. A method for removing nitrogen oxides from a combustion exhaust gas, which comprises a step for processing a combustion exhaust gas containing nitrogen oxides in the presence of the above-described NOx reduction catalyst.

## Description

### TECHNICAL FIELD

The present invention relates to a denitration catalyst. More specifically, the present invention relates to a denitration catalyst having excellent wear or abrasion resistance.

### BACKGROUND ART

As a method of removing nitrogen oxides (NOx) in flue gas emitted from power plants, various factories, automobiles, etc., known are the flue gas denitration method by selective catalytic reduction using a reducing agent such as ammonia (NH₃). Titanium oxide (TiO₂) -based catalysts, zeolite-based catalysts, and the like are known as catalysts used in this denitration method. As the shape of the catalyst, a honeycomb shape, a plate shape, or the like is known.

Exhaust gas from coal-fired boilers may contain a large amount of soot and dust. The denitration catalyst may be abraded and worn by the soot and dust contained in the exhaust gas. Alkaline components contained in the soot and dust may deactivate reaction active sites of the denitration catalyst. As the result, the efficiency of denitration gradually decreases.

Various denitration catalysts have been proposed from the viewpoint of preventing a decrease in denitration efficiency and extending the catalyst life.

For example, Patent Document 1 discloses a catalyst for reducing and removing nitrogen oxides in exhaust gas containing dust with ammonia, wherein cracks on the surface of the catalyst are filled with inert carrier particles.

Patent Document 2 discloses an exhaust gas purification filter comprising a base material having a large number of fine pores and a coating layer provided on the surface of the base material and carrying a catalyst for purifying the exhaust gas discharged from the internal combustion engine, characterized in that the coating layer has communication holes communicating from the surface of the coating layer to the surface of the base material, and the porosity of the coating layer is 30 to 80%.

In Patent Document 3, described is a ceramic catalyst carrier for exhaust gas purification, wherein the carrier has a honeycomb structure in which a bundle of a large number of parallel flow paths partitioned by a division wall is surrounded by an outer peripheral wall and the carrier is made of a ceramic comprising cordierite as a main component, characterized in that the thickness of the division wall is 0.04 to 0.15 mm, the thickness of the outer peripheral wall is 0.3 mm or more, and the microcrack density in an arbitrary cross section of the outer peripheral wall is 0.004 to 0.02 µm / µm².

In Patent Document 4, described is a honeycomb catalyst for treating exhaust gas from co-firing of coal and biomass, wherein the catalyst comprises an inorganic oxide carrier containing Ti, Si and W and a metal component containing at least one selected from V and Mo, characterized in that the catalyst has a deposit hole with a width of 4 to 20 µm and a depth of 20 to 300 µm to be a physical deposition hole for a calcium salt, the total square measure of openings of the deposit hole is for 5 to 10% of the surface square measure of the catalyst inner wall, and difference (SA_{BET}-SA_{Hg}) between the specific surface area (SA_{BET}) by the BET method and the specific surface area (SA_{Hg}) indicated by the catalyst pores of 5 nm to 5 µm by the mercury intrusion porosimetry method is in the range of 15 to 25 m² / g.

### CITATION LIST

### PATENT LITERATURE

Patent Document 1 : JP 2013-615 A
Patent Document 2 : JP H08-332329 A
Patent Document 3 : JP H09-155189 A
Patent Document 4 : JP 2016-123954 A

### SUMMARY OF THE INVENTION

### PROBLEMS TO BE RESOLVED BY THE INVENTION

An object of the present invention is to provide a denitration catalyst having excellent wear or abrasion resistance.

### MEANS FOR SOLVING THE PROBLEMS

In order to solve the above problems, the present invention including the following aspects has been completed.
[1] A denitration catalyst, composed of a shaped product comprising a catalyst component, wherein the shaped product has micro cracks on the surface of the shaped product, and the micro cracks have a 95 % crack width of 100 µm or less and a crack area ratio variation coefficient of 0.7 or less,
   wherein the 95% crack width is a value when cumulative from the smallest to 95 % in a span-based cumulative distribution of all measured crack widths,
   crack area ratio is a ratio of a total square measure of openings of cracks in one region of 1300 µm × 990 µm randomly selected on the surface of the shaped product to a square measure of the region, average crack area ratio is a value obtained by dividing a total of the crack area ratios in every region of 1300 µm × 990 µm randomly selected on the surface of the shaped product by the number of the regions,
   crack area ratio variation coefficient is a value obtained by dividing a positive square root of an arithmetic mean of squares of every difference between the average crack area ratio and the crack area ratio in the region of 1300 µm × 990 µm randomly selected on the surface of the shaped product (that is, standard deviation of the crack area ratio) by the average crack area ratio.
[2] The denitration catalyst according to [1], wherein the micro cracks have the average crack area ratio of 1 to 14%.
[3] The denitration catalyst according to [1] or [2], wherein the micro cracks spread in a mesh pattern on the surface of the shaped product, the 95% crack width is 40 µm or less, and the average crack area ratio is 1 to 6%.
[4] The denitration catalyst according to [1] or [2], wherein the micro cracks spread in a bipectinate pattern on the surface of the shaped product, and
   the average crack area ratio is 6 to 14%.
[5] A method for removing nitrogen oxides from combustion exhaust gas, wherein the method comprises treating the combustion exhaust gas containing nitrogen oxides in the presence of a denitration catalyst composed of a shaped product comprising a catalyst component, wherein the shaped product has micro cracks on the surface of the shaped product, and the micro cracks have a 95 % crack width of 100 µm or less and a crack area ratio variation coefficient of 0.7 or less,
   wherein the 95% crack width is a value when cumulative from the smallest to 95 % in a span-based cumulative distribution of all measured crack widths,
   crack area ratio is a ratio of a total square measure of openings of cracks in one region of 1300 µm × 990 µm randomly selected on the surface of the shaped product to a square measure of the region, average crack area ratio is a value obtained by
   dividing a total of the crack area ratios in every region of 1300 µm × 990 µm randomly selected on the surface of the shaped product by the number of the regions,
   crack area ratio variation coefficient is a value obtained by dividing a positive square root of an arithmetic mean of squares of every difference between the average crack area ratio and the crack area ratio in the region of 1300 µm × 990 µm randomly selected on the surface of the shaped product (that is, standard deviation of the crack area ratio) by the average crack area ratio.
[6] The method according to [5], wherein the micro cracks have the average crack area ratio of 1 to 14%.

### ADVANTAGEOUS EFFECTS OF THE INVENTION

The denitration catalyst of the present invention has excellent abrasion or wear resistance, suppresses a decrease in denitration ratio, and has a long life. The denitration catalyst of the present invention can be suitably used for removing nitrogen oxides in combustion exhaust gas from coal-fired boilers, coal-biomass co-fired boilers, etc. which contains a large amount of soot and dust.

The mechanism by which such an effect occurs has not been clarified, but it is considered that the abrasion strength is increased by denser or closer packing on the surface of the shaped product due to shrinkage produced on the surface of the shaped product during the formation of micro cracks or by releasing the stress on the surface of the surface by micro cracks and reducing the stress on the surface.

### BRIEF DESCRIPTION OF THE DRAWINGS

FIG. 1 is a figure which shows observation images in 10 regions randomly selected on the surface of the shaped product of Example 1 by a scanning electron microscope.

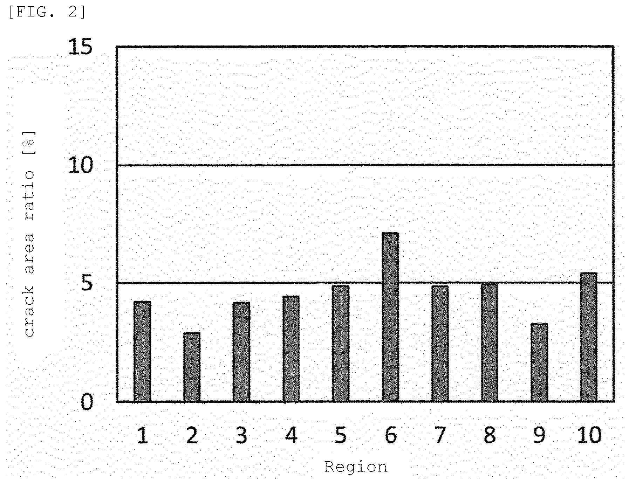

FIG. 2 is a figure which shows the distribution of the crack area ratio in the observation images shown in FIG. 1.
FIG. 3 is a figure which shows observation images in 10 regions randomly selected on the surface of the shaped product of Example 2 by a scanning electron microscope.
FIG. 4 is a figure which shows the distribution of the crack area ratio in the observation images shown in FIG. 3.
FIG. 5 is a figure which shows observation images in 10 regions randomly selected on the surface of the shaped product of Example 3 by a scanning electron microscope.
FIG. 6 is a figure which shows the distribution of the crack area ratio in the observation images shown in FIG. 5.
FIG. 7 is a figure which shows observation images in 10 regions randomly selected on the surface of the shaped product of Comparative Example by a scanning electron microscope.

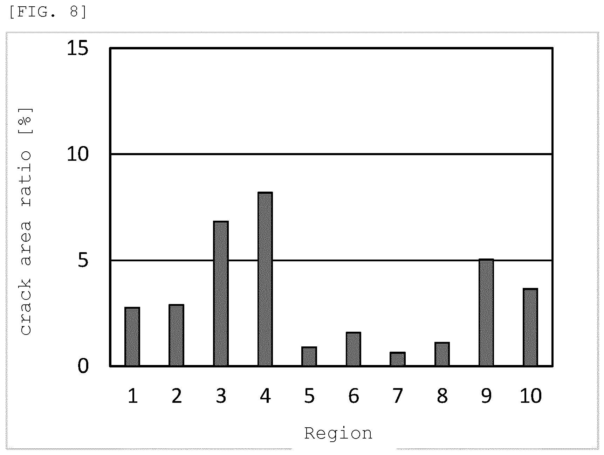

FIG. 8 is a figure which shows the distribution of the crack area ratio in the observation images shown in FIG. 7.
FIG. 9 is a figure which shows observation images in 10 regions randomly selected on the surface of the shaped product of Comparative Example 2 by a scanning electron microscope.

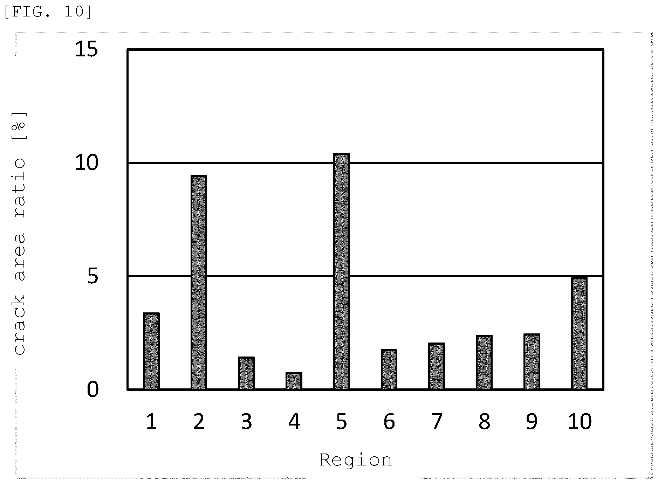

FIG. 10 is a figure which shows the distribution of the crack area ratio in the observation images shown in FIG. 9.
FIG. 11 is a figure which shows observation images in 10 regions randomly selected on the surface of the shaped product of Comparative Example 3 by a scanning electron microscope.

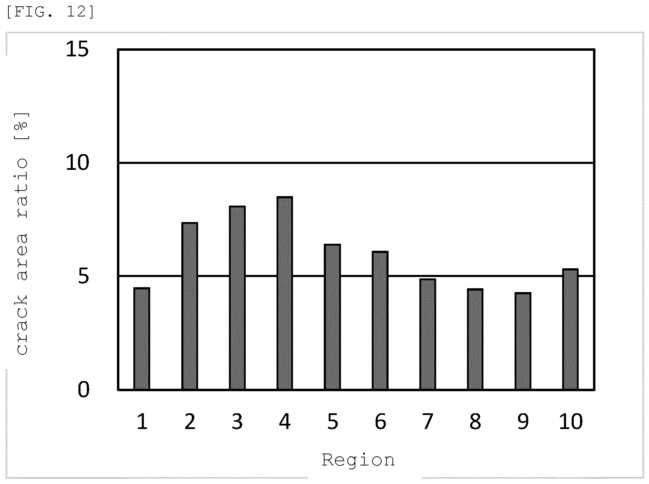

FIG. 12 is a figure which shows the distribution of the crack area ratio in the observation images shown in FIG. 11.
FIG. 13 is a figure which shows the relative abrasion loss in each denitration catalyst of Examples 1 to 3 and Comparative Example 1.
FIG. 14 is a figure which shows the average age ratio of a catalyst exchange interval in an actual machine of Comparative Example 3 with respect to Example 1.

### EMBODIMENTS FOR CARRYING OUT THE INVENTION

The denitration catalyst of the present invention is composed of a shaped product comprising a catalyst component.

The shaped product constituting the denitration catalyst of the present invention can have a shape such as a honeycomb, a plate, or a corrugated board. The honeycomb-shaped product can be obtained, for example, by extrusion molding the catalyst component. The plate-shaped product can be obtained, for example, by impregnating or coating a plate-shaped base material, such as a metal lath, an inorganic fiber woven fabric or an inorganic fiber non-woven fabric, with a catalyst component. Examples of the plate-shaped product can include those having a flat portion and a convex streak portion. A plurality of plate-shaped product can be used by superimposing them so that the convex streak portion abuts on the flat portion and a gap is formed between the flat portions. The corrugated board-shaped product is obtained, for example, by superimposing a flat plate-shaped product and a corrugated plate-shaped product. A corrugated plate-shaped product or a shaped product having a flat portion and a convex streak portion can be obtained, for example, by subjecting a flat plate-shaped product to bending press molding or the like.

As the catalyst component, mentioned can be one comprising titanium oxide, molybdenum and / or tungsten oxide, and vanadium oxide (titanium-based catalyst); one mainly comprising aluminosilicate such as zeolite carrying a metal such as Cu or Fe (a zeolite-based catalyst, and a mixture of the titanium-based catalyst and the zeolite-based catalyst; and the like. Of these, titanium-based catalyst is preferable.

Examples of titanium-based catalyst can include Ti-V-W catalyst, Ti-V-Mo catalyst, Ti-V-W-Mo catalyst and the like. A ratio of the V element to the Ti element is preferably 2% by weight or less, more preferably 1% by weight or less, as a weight percentage of V₂O₅ / TiO₂. A ratio of Mo element and / or W element to Ti element is preferably 10% by weight or less, more preferably 5% by weight or less, as a weight percentage of molybdenum oxide and tungsten oxide (MoO₃ + WO₃) / TiO₂.

In the preparation of the shaped product, titanium oxide powder or titanium oxide precursor can be used as a raw material for an oxide of titanium. Examples of the titanium oxide precursor can include titanium oxide slurry, titanium oxide sol; titanium sulfate, titanium tetrachloride, titanate, titanium alkoxide and the like. In the present invention, as a raw material for the oxide of titanium, those forming anatase-type titanium oxide are preferably used.

As a raw material for an oxide of vanadium, vanadium compounds such as vanadium pentoxide, ammonium metavanadate, and vanadyl sulfate can be used.

As a raw material for an oxide of tungsten, ammonium paratungstate, ammonium metatungstate, tungsten trioxide, tungsten chloride, etc. can be used.

Ammonium molybdate, molybdenum trioxide, etc. can be used as a raw material for an oxide of molybdenum.

The shaped product used in the present invention may comprise, as co-catalyst or additive, P oxide, S oxide, Al oxide (for example, alumina), Si oxide (for example, glass fiber), Zr oxide (for example, zirconia), gypsum (for example, dihydrate gypsum, etc.), zeolites and the like. These can be used in the form of powders, sol, slurries, fibers and the like in the production of shaped product.

The shaped product constituting the denitration catalyst of the present invention has micro cracks on its surface. Cracks are roughly classified into nano cracks, micro cracks, and macro cracks. The crack openings on the surface of the shaped product have a darker color than the ground color in the observation image by the scanning electron microscope. Therefore, in the present invention, the black portion observed when the image observed by the scanning electron microscope is converted into two levels of black and white by an image processing device having a pixel size of 2 µm is regarded as a crack. Cracks smaller than the pixel size cannot be distinguished from the background color and become white due to the two levels. Therefore, in the present invention, they are regarded as nano cracks and excluded from micro cracks.

On the other hand, it is preferable that the shaped product constituting the denitration catalyst of the present invention has no macro cracks on its surface. The macro crack has a crack width of more than 500 µm. Macro cracks may affect the mechanical resistance of the shaped product and can cause peeling, shedding, breaking and the like.

The micro cracks in the present invention have a 95% crack width of 100 µm or less. The 95% crack width B₉₅ is a value when cumulative from the smallest to 95 % in a span-based cumulative distribution of all measured crack widths.

Micro cracks usually do not affect the mechanical resistance of the shaped product. The 5% crack width of the micro cracks is not particularly limited, but is preferably 2 µm or more. The 5% crack width B₅ is a value when cumulative from the smallest to 5 % in a span-based cumulative distribution of all measured crack widths. In the present invention, a span-based cumulative distribution is made in the range where the crack width is 2 µm or more and 500 µm or less.

The micro cracks in the present invention have a crack area ratio variation coefficient of 0.7 or less, preferably 0.5 or less, and more preferably 0.3 or less.

Further, the micro cracks in the present invention have an average crack area ratio is preferably 1 to 14%.

Crack area ratio is a ratio of a total square measure of openings of cracks in one region of 1300 µm × 990 µm randomly selected on the surface of the shaped product to a square measure of the region. The crack area ratio can be calculated from a square measure of the white region and a square measure of the black region by subjecting the scanning electron microscope image to two-level processing (image processing of the crack openings to the black region and the other parts to the white region).

Average crack area ratio is a value obtained by dividing a total of the crack area ratios in every region of 1300 µm × 990 µm randomly selected on the surface of the shaped product by the number of the regions.

Crack area ratio variation coefficient is a value obtained by dividing a standard deviation of the crack area ratio by the average crack area ratio. If the crack area ratio variation coefficient exceeds 0.7, the wear resistance tends to decrease. Standard deviation of the crack area ratio is a positive square root of an arithmetic mean of squares of every difference between the average crack area ratio and the crack area ratio in the region of 1300 µm × 990 µm randomly selected on the surface of the shaped product. An average of crack intervals is preferably 200 to 500 µm.

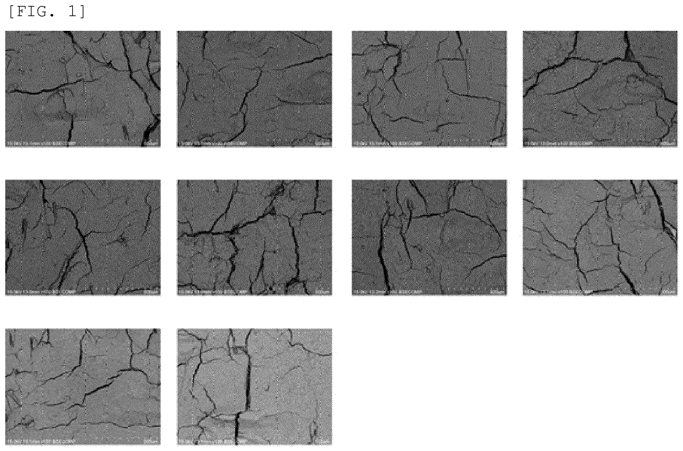

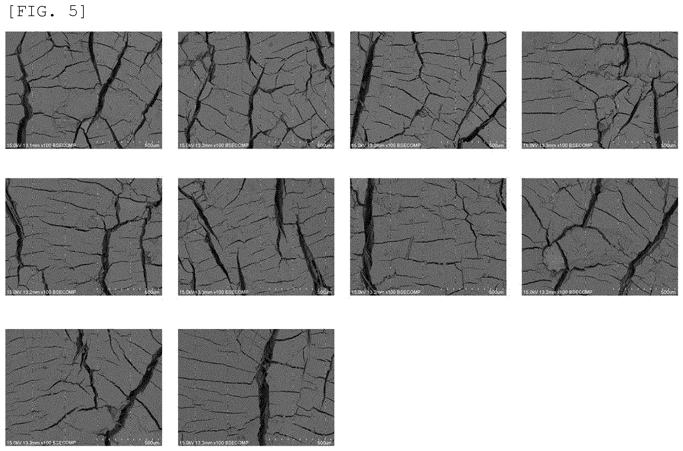

The micro cracks preferably spread on the surface of the shaped product in a mesh pattern (see FIG. 1) or in a bipectinate pattern (see FIG. 5).

The micro cracks spreading in a mesh pattern on the surface of the shaped product have a 95% crack width of preferably 40 µm or less, and a crack area ratio variation coefficient of preferably 0.7 or less, more preferably 0.5 or less, still more preferable 0.3 or less. Further, an average crack area ratio of the micro cracks spreading in a mesh pattern on the surface of the shaped product is preferably 1 to 6%.

The micro cracks spreading in a bipectinate pattern on the surface of the shaped product have a 95% crack width of preferably 100 µm or less, and a crack area ratio variation coefficient of preferably 0.7 or less, more preferably 0.5 or less, further preferably 0.4 or less, and even more preferably 0.35 or less. Further, an average crack area ratio of the micro cracks spreading in a bipectinate pattern on the surface of the shaped product is preferably 6 to 14%.

The micro cracks can be obtained by controlling the amount of catalyst component, the amount of water, kneading conditions, shaping conditions, drying conditions, firing conditions, etc. used when producing a shaped product.

The crack area ratio variation coefficient increases as there are variations in the amount of catalyst component, the amount of water, shaping conditions, drying conditions, firing conditions, etc., so shaping is performed so that there is no distribution in the amount of catalyst components and water. It is preferable to perform drying or firing so that the temperature and humidity are not distributed. The details of the cause of the distribution of the amount of the catalyst component and water are unknown, but preventing water squeezing due to the pressure when the catalyst component paste is shaped and / or subsequent water seepage is preferred in reducing the distribution in the amount of catalyst components and water. In order to prevent distribution of temperature and humidity, the thickness of the shaped product is preferably reduced, the temperature change due to heating is preferably moderated, and the circulation of gas in the dryer or firing furnace is preferably increased. A shaped product having the micro cracks can be efficiently obtained by the above method. Then, the obtained shaped product can be used as it is, or a shaped product having the micro cracks specified in the present invention can be selected from the obtained shaped products and used as a denitration catalyst.

The method for removing nitrogen oxides from the combustion exhaust gas of the present invention comprises treating the combustion exhaust gas containing nitrogen oxides in the presence of the denitration catalyst of the present invention described above. The treatment of the combustion exhaust gas in the presence of the denitration catalyst can be performed, for example, by passing the combustion exhaust gas and the reducing agent (ammonia) through a fixed bed filled with the denitration catalyst of the present invention. The denitration catalyst of the present invention is hard to wear even if the combustion exhaust gas contains a large amount of soot and dust, and maintains the denitration performance for a long period of time. Therefore, it can be suitably used in the purification of gas discharged from a boiler in a thermal power plant, a factory, or the like.

### EXAMPLE 1

Molybdenum trioxide, ammonium metavanadate and silica sol were added to titanium oxide powder, aluminum compound powder and alumina silicate fibers were further added, and kneaded while adjusting the water content to obtain a catalyst paste. The water content was adjusted so that micro cracks were formed uniformly. The catalyst paste was applied to an expanded metal lath and then pressed to obtain a flat plate-shaped article. The shaped article was dried at 120 °C for 1 hour. Then, it was placed in a baking furnace, the temperature was raised from room temperature to 500 °C over 2 hours, maintained at 500 °C for 2 hours, and then cooled to room temperature over 2 hours to obtain a shaped product. FIG. 1 shows each observation image in 10 randomly selected regions on the surface of the obtained shaped product. The micro cracks spread in a mesh pattern on the surface of the shaped product in every region. The micro cracks had a 95% crack width B₉₅ of 50 µm, an average crack area ratio of 4.61%, and a crack area ratio variation coefficient of 0.24. This shaped product was used as a denitration catalyst.

A grid having an average particle diameter of 500 µm was naturally dropped and collided with the denitration catalyst test piece at a predetermined grid amount, drop distance and incident angle. The weight change (wear loss) before and after this collision treatment was measured. The ratio (relative wear loss) of the measured wear loss to a wear loss of a shaped product obtained in Comparative Example 1 described later was 0.28.

### Example 2

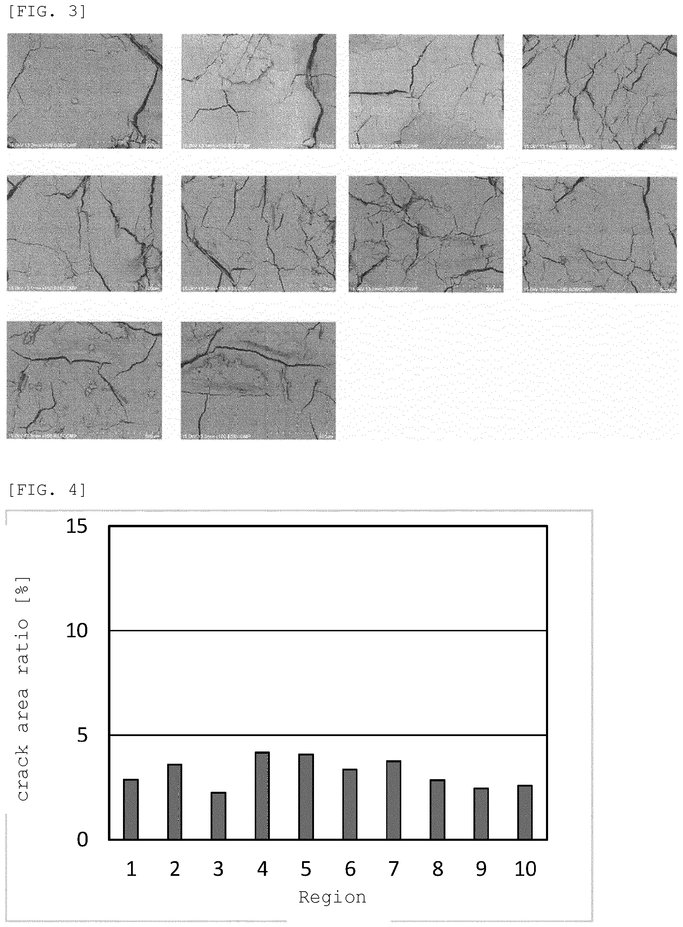

A denitration catalyst was obtained in the same manner as in Example 1 except that the shaped article was dried at 30 °C for 12 hours, then placed in a baking furnace, heated from room temperature to 500 °C over 12 hours, maintained at 500 °C for 2 hours, and then cooled to room temperature over 12 hours. FIG. 3 shows each observation image in 10 randomly selected regions on the surface of the obtained shaped product.

The micro cracks spread in a mesh pattern on the surface of the shaped product in every region. The micro cracks had a 95% crack width B₉₅ of 30 µm, an average crack area ratio of 3.19%, and a crack area ratio variation coefficient of 0.21. This shaped product was used as a denitration catalyst. The relative wear loss was 0.30.

### Example 3

A denitration catalyst was obtained in the same manner as in Example 1 except that the water content, drying conditions, and firing conditions were changed. FIG. 5 shows each observation image in 10 randomly selected regions on the surface of the obtained shaped product. The micro cracks spread in a bipectinate pattern on the surface of the shaped product in every region. The micro cracks had a 95% crack width B₉₅ of 90 µm, an average crack area ratio of 12.27%, and a crack area ratio variation coefficient of 0.08. This shaped product was used as a denitration catalyst. The relative wear loss was 0.34.

### Comparative Example 1

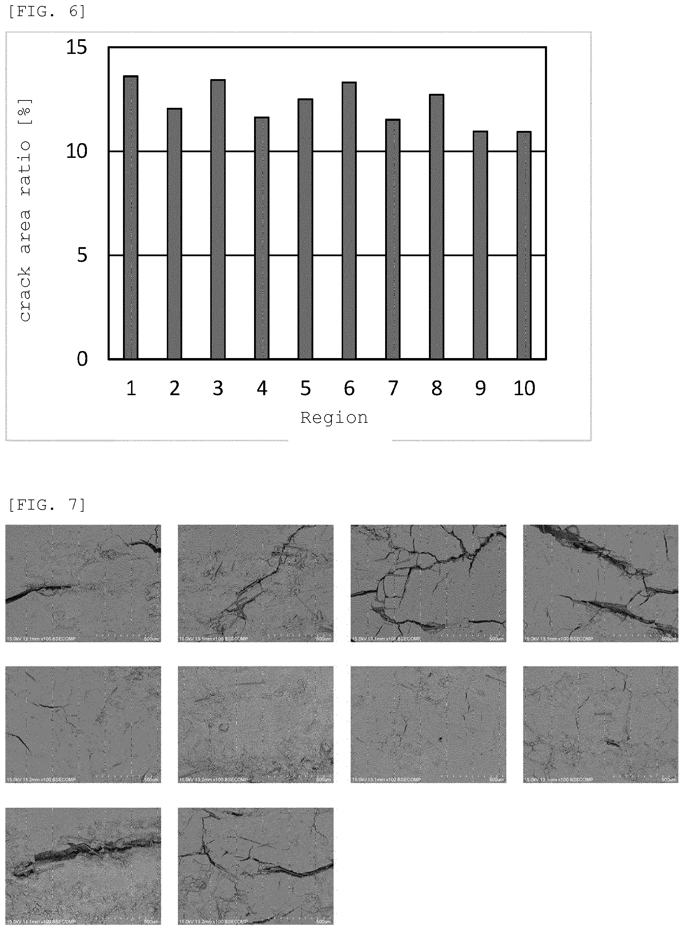

A denitration catalyst was obtained in the same manner as in Example 1 except that the water content, drying conditions, and firing conditions were changed. FIG. 7 shows each observation image in 10 randomly selected regions on the surface of the obtained shaped product. The micro cracks spread in a mesh pattern on the surface of the shaped product only in a part of the region. The micro cracks had a 95% crack width B₉₅ of 110 µm, an average crack area ratio of 3.36%, and a crack area ratio variation coefficient of 0.73. This shaped product was used as a denitration catalyst. The relative wear loss was 1.00.

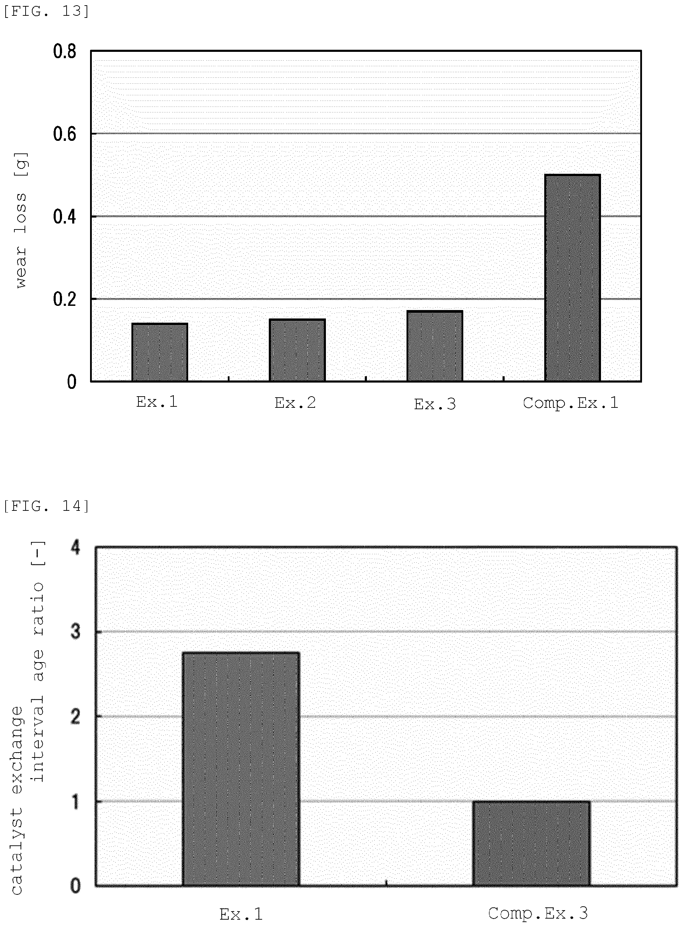

As shown in FIG. 13, the denitration catalyst of the present invention has a low relative wear loss.

### Comparative Example 2

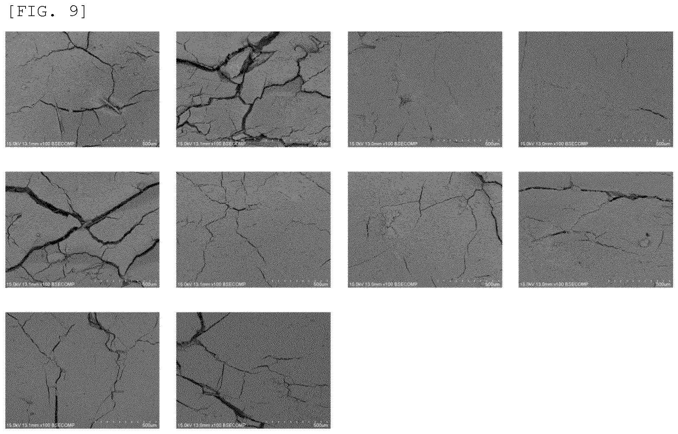

A denitration catalyst was obtained in the same manner as in Example 1 except that the water content, drying conditions, and firing conditions were changed. FIG. 9 shows each observation image in 10 randomly selected regions on the surface of the obtained shaped product. The micro cracks spread in a mesh pattern on the surface of the shaped product only in a part of the region. The micro cracks had a 95% crack width B₉₅ of 60 µm, an average crack area ratio of 3.88%, and a crack area ratio variation coefficient of 0.83. This shaped product was used as a denitration catalyst. The relative wear loss was 0.54.

### Comparative Example 3

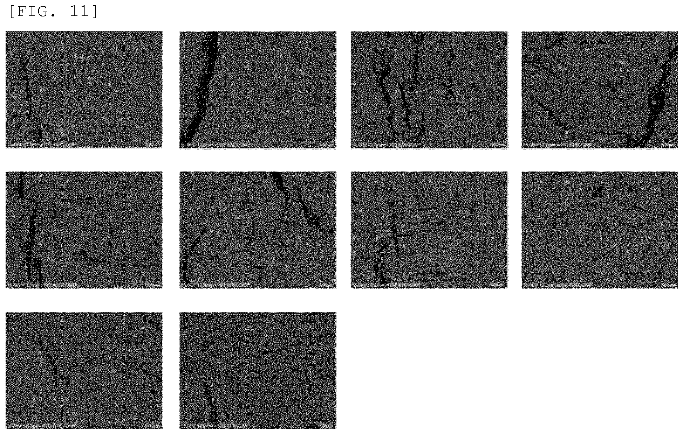

A denitration catalyst was obtained in the same manner as in Example 1 except that the water content, drying conditions, and firing conditions were changed. FIG. 11 shows each observation image in 10 randomly selected regions on the surface of the obtained shaped product. The micro cracks spread in a mesh pattern on the surface of the shaped product only in a part of the region. The micro cracks had a 95% crack width B₉₅ of 110 µm, an average crack area ratio of 5.97%, and a crack area ratio variation coefficient of 0.23. This shaped product was used as a denitration catalyst. The relative wear loss was 0.46.

FIG. 14 shows the average age ratio of the catalyst exchange interval in the actual machine of Comparative Example 3 with respect to Example 1. By optimizing the state of micro cracks as in Example 1, wear due to ash can be suppressed and the number of catalyst replacements can be dramatically reduced.

## Claims

1. A denitration catalyst, composed of a shaped product comprising a catalyst component, wherein the shaped product has micro cracks on the surface of the shaped product, and the micro cracks have a 95 % crack width of 100 µm or less and a crack area ratio variation coefficient of 0.7 or less,
wherein the 95% crack width is a value when cumulative from the smallest to 95 % in a span-based cumulative distribution of all measured crack widths,
crack area ratio is a ratio of a total square measure of openings of cracks in one region of 1300 µm × 990 µm randomly selected on the surface of the shaped product to a square measure of the region, average crack area ratio is a value obtained by dividing a total of the crack area ratios in every region of 1300 µm × 990 µm randomly selected on the surface of the shaped product by the number of the regions,
crack area ratio variation coefficient is a value obtained by dividing a positive square root of an arithmetic mean of squares of every difference between the average crack area ratio and the crack area ratio in the region of 1300 µm × 990 µm randomly selected on the surface of the shaped product (that is, standard deviation of the crack area ratio) by the average crack area ratio.

2. The denitration catalyst according to claim 1,
wherein the micro cracks have the average crack area ratio of 1 to 14%.

3. The denitration catalyst according to claim 1 or 2, wherein the micro cracks spread in a mesh pattern on the surface of the shaped product,
the 95% crack width is 40 µm or less, and
the average crack area ratio is 1 to 6%.

4. The denitration catalyst according to claim 1 or 2, wherein the micro cracks spread in a bipectinate pattern on the surface of the shaped product, and the average crack area ratio is 6 to 14%.

5. A method for removing nitrogen oxides from combustion exhaust gas, wherein the method comprises treating the combustion exhaust gas containing nitrogen oxides in the presence of a denitration catalyst composed of a shaped product comprising a catalyst component, wherein the shaped product has micro cracks on the surface of the shaped product, and the micro cracks have a 95 % crack width of 100 µm or less and a crack area ratio variation coefficient of 0.7 or less,
wherein the 95% crack width is a value when cumulative from the smallest to 95 % in a span-based cumulative distribution of all measured crack widths,
crack area ratio is a ratio of a total square measure of openings of cracks in one region of 1300 µm × 990 µm randomly selected on the surface of the shaped product to a square measure of the region, average crack area ratio is a value obtained by dividing a total of the crack area ratios in every region of 1300 µm × 990 µm randomly selected on the surface of the shaped product by the number of the regions,
crack area ratio variation coefficient is a value obtained by dividing a positive square root of an arithmetic mean of squares of every difference between the average crack area ratio and the crack area ratio in the region of 1300 µm × 990 µm randomly selected on the surface of the shaped product (that is, standard deviation of the crack area ratio) by the average crack area ratio.

6. The method according to claim 5, wherein the micro cracks have the average crack area ratio of 1 to 14 %.
